# EUROPÄISCHE PATENTSCHRIFT

(11) **EP 2 407 846 B1**
(45) Veröffentlichungstag und Bekanntmachung des Hinweises auf die Patenterteilung: **30.10.2019**
(21) Anmeldenummer: 11165756.5
(22) Anmeldetag: 11.05.2011
(51) Int. Cl.: B65G 47/71, B65G 47/82, B65G 43/00, G05B 19/418

(54) **Verfahren und Vorrichtung zum Überprüfen der Ausleitung eines Gegenstandes aus einer Sequenz und entsprechendes Leitsystem**
Method and apparatus for monitoring the deviation of an object from a sequence and corresponding control system
Méthode et appareil de surveillance de la déviation d'un objet à partir d'une séquence et commande correspondants

(30) Priorität: 13.07.2010 DE 102010031298
(43) Veröffentlichungstag der Anmeldung: 18.01.2012
(73) Patentinhaber: Krones AG, 93073 Neutraubling (DE)
(72) Erfinder: Gut, Thorsten, 93073 Neutraubling (DE)
(74) Vertreter: Grünecker Patent- und Rechtsanwälte PartG mbB

(56) Entgegenhaltungen:
- EP-A1- 1 471 008
- DE-A1-102005 021 109
- DE-A1-102008 053 765
- DE-A1-102008 054 312
- US-A1- 2004 215 370
- US-A1- 2005 251 364

## Beschreibung

Die vorliegende Erfindung betrifft ein Verfahren zum Überprüfen der Ausleitung eines Gegenstandes aus einer Sequenz von Gegenständen durch ein Ausleitsystem.

Eine Vorrichtung und Verfahren zum Bewegen eines Produktes ist beispielsweise aus der DE 10 2005 021 109 A1 bekannt. Dabei wird ein von einem Antrieb bewegter Stempel gegen das Produkt gesetzt. Eine Detektionseinrichtung dient zum Erkennen der Position des zugeführten Produktes.

Ein Verfahren und eine Vorrichtung zur sicheren Erfassung einer kinematischen Größe eines Manipulators ist aus der DE 10 2008 054 312 A1 bekannt.

Auszuleitende Gegenstände, beispielsweise fehlerhafte Gegenstände, die in einer Sequenz von Gegenständen durch ein Transportelement gefördert werden, werden häufig durch eine Inspektionsvorrichtung erkannt und dann durch ein Ausleitsystem aus der Sequenz von Gegenständen ausgeleitet. Bei den Gegenständen kann es sich beispielsweise um gefüllte Behälter in der Getränkeindustrie handeln. Zur sogenannten Ausscheidekontrolle ist häufig nach dem Ausleitsystem eine Lichtschranke vorgesehen, die kontrolliert, ob der Behälter tatsächlich ausgeleitet wurde. Diese Überprüfung ist von hoher Bedeutung, da es ansonsten dazu kommen kann, dass ein beschädigter oder fehlerhafter Gegenstand in den Vertrieb kommt.

Es sind gewisse Situationen denkbar, in denen eine fehlerhafte, also nicht korrekt durchgeführte Ausleitung eines Gegenstandes durch eine nach dem Ausleitsystem angeordnete Lichtschranke nicht festgestellt werden kann.

Daher ist es Aufgabe der vorliegenden Erfindung, ein zuverlässiges Verfahren zum Überprüfen der Ausleitung eines Gegenstandes aus einer Sequenz von Gegenständen durch ein Ausleitsystem bereitzustellen.

Die Aufgabe wird mittels eines Verfahrens gemäß Anspruch 1, einer Vorrichtung gemäß Anspruch 8 und einem Ausleitsystem gemäß Anspruch 9 gelöst.

Die Erfindung stellt ein Verfahren zum Überprüfen der Ausleitung eines Gegenstandes aus einer Sequenz von Gegenständen durch ein Ausleitsystem bereit, umfassend die Schritte: Bestimmen des zeitlichen Verlaufs eines Ist-Wertes wenigstens einer belastungsabhängigen Größe des Ausleitsystems und Vergleichen des zeitlichen Verlaufs des Ist-Wertes mit dem zeitlichen Verlauf des Soll-Wertes dieser wenigstens einen belastungsabhängigen Größe.

Aus dem Vergleich des zeitlichen Verlaufs des Ist-Wertes mit dem zeitlichen Verlauf des Soll-Wertes kann eine zuverlässige Überprüfung der Ausleitung eines Gegenstandes erreicht werden.

Bei der Sequenz von Gegenständen kann es sich insbesondere um eine Sequenz von Gegenständen in der Lebensmittelindustrie, insbesondere in der Getränkeindustrie, handeln.

Bei den Gegenständen kann es sich insbesondere um Behälter, beispielsweise für Getränke, handeln. Die Gegenstände können insbesondere Flaschen, beispielsweise Glas- oder Kunststoffflaschen, sein.

Unter einer Sequenz von Gegenständen kann hier allgemein eine geordnete oder ungeordnete Reihenfolge von Gegenständen verstanden werden. Die Sequenz von Gegenständen kann beispielsweise ein Behälterstrom sein.

Die Sequenz von Gegenständen kann, insbesondere mittels eines Transportelements, an dem Ausleitsystem vorbeigeführt oder vorbeibewegt werden.

Der Gegenstand, der aus der Sequenz von Gegenständen ausgeleitet oder entfernt werden soll, kann hier insbesondere als auszuleitender Gegenstand bezeichnet werden.

Bei dem Gegenstand, der aus der Sequenz von Gegenständen ausgeleitet werden soll kann es sich insbesondere um einen fehlerhaften Gegenstand handeln. Mit anderen Worten kann das Verfahren ein Verfahren zum Überprüfen der Ausleitung eines fehlerhaften Gegenstandes aus einer Sequenz von Gegenständen durch ein Ausleitsystem sein.

Das Ausleitsystem kann insbesondere einen Pusher und/oder einen elektronisch gesteuerten Linearmotor umfassen. Der elektronisch gesteuerte Linearmotor kann insbesondere einen Pusher antreiben oder ein Pusher sein.

Ein Pusher kann insbesondere ein bewegbares Kontaktelement, insbesondere einen bewegbaren Stempel, umfassen, welches gegen den auszuleitenden Gegenstand gedrückt werden kann, insbesondere derart, dass der auszuleitende Gegenstand aus der Sequenz von Gegenständen ausgeleitet wird.

Der Pusher kann quer zur Transportrichtung der Sequenz von Gegenständen angeordnet sein. Mit anderen Worten kann der Pusher derart angeordnet sein, dass die Bewegungsrichtung des bewegbaren Kontaktelements und die Transportrichtung der Sequenz von Gegenständen einen Winkel zwischen 45° und 135°, insbesondere zwischen 85° und 95°, insbesondere von 90°, einschließen.

Als belastungsabhängige Größe des Ausleitsystems kann insbesondere eine Größe verstanden werden, welche in Abhängigkeit von einer Belastung oder Last des Ausleitsystems unterschiedliche Werte annehmen kann. Insbesondere kann der zeitliche Verlauf eines Wertes der belastungsabhängigen Größe davon abhängen, ob bei einem Ausleitungsvorgang ein Gegenstand korrekt ausgeleitet wird. Mit anderen Worten kann der zeitliche Verlauf der wenigstens einen belastungsabhängigen Größe während eines Ausleitvorgangs für den Fall, dass der Gegenstand korrekt ausgeleitet wird verschieden sein von dem zeitlichen Verlauf für den Fall, dass der Gegenstand nicht korrekt ausgeleitet wird.

Der zeitliche Verlauf des Ist-Wertes kann für eine vorherbestimmte Zeitdauer oder Zeitspanne bestimmt werden. Insbesondere kann der zeitliche Verlauf des Ist-Wertes der wenigstens einen belastungsabhängigen Größe des Ausleitsystems für die Zeitspanne eines Ausleitvorganges bestimmt werden.

Der zeitliche Verlauf des Soll-Wertes der wenigstens einen belastungsabhängigen Größe kann dem zeitlichen Verlauf des Soll-Wertes während derselben vorherbestimmten Zeitdauer oder Zeitspanne entsprechen, insbesondere für die Zeitspanne eines Ausleitprozesses oder Ausleitvorganges. Der zeitliche Verlauf des Soll-Wertes kann insbesondere einem vorherbestimmten zeitlichen Verlauf entsprechen.

Insbesondere kann der bestimmte zeitliche Verlauf des Ist-Wertes mit dem vorherbestimmten zeitlichen Verlauf des Soll-Wertes der wenigstens einen belastungsabhängigen Größe verglichen werden, insbesondere für die Zeitdauer eines Ausleitvorganges.

Die wenigstens eine belastungsabhängige Größe kann eine Auslenkung eines Kontaktelements eines Pushers des Ausleitsystems umfassen oder einer solchen entsprechen. Der zeitabhängige Verlauf der Bewegung des Pushers, insbesondere des Kontaktelements des Pushers, kann abhängig davon variieren, ob das Kontaktelement während des Ausleitvorganges auf den Widerstand eines auszuleitenden Gegenstandes stößt oder nicht. Durch Vergleichen des zeitlichen Verlaufs des Ist-Wertes der Auslenkung des Kontaktelements eines Pushers mit dem zeitlichen Verlauf des Soll-Wertes kann festgestellt werden, ob der Gegenstand korrekt aus der Sequenz von Gegenständen ausgeleitet wurde.

In diesem Fall kann der zeitliche Verlauf des Soll-Wertes insbesondere dem zeitlichen Verlauf der Auslenkung eines Kontaktelements eines Pushers während eines Ausleitvorganges entsprechen, bei dem der Pusher einen Gegenstand korrekt ausleitet.

Alternativ kann der zeitliche Verlauf des Soll-Wertes insbesondere dem zeitlichen Verlauf der Auslenkung eines unbelasteten Pushers während eines Ausleitvorganges entsprechen, insbesondere bei dem das Kontaktelement des Pushers während des Ausleitvorganges keinen Gegenstand berührt.

Die wenigstens eine belastungsabhängige Größe kann eine Stromaufnahme und/oder eine Positionsaufnahme eines elektronisch gesteuerten Linearmotors des Ausleitsystems umfassen oder einer solchen entsprechen. In diesem Fall kann der elektronisch gesteuerte Linearmotor einen Pusher antreiben oder ein Pusher sein. Insbesondere wenn der elektronisch gesteuerte Linearmotor des Ausleitsystems einen Pusher antreibt oder ein Pusher ist, kann sich die Stromaufnahme oder Last oder die Positionsaufnahme des elektronisch gesteuerten Linearmotors für den Fall, dass der Gegenstand korrekt ausgeleitet wurde von dem Fall, dass der Gegenstand nicht korrekt ausgeleitet wurde, unterscheiden. Daher kann durch das Vergleichen des zeitlichen Verlaufs des Ist-Wertes mit dem zeitlichen Verlauf des Soll-Wertes der Stromaufnahme und/oder der Positionsaufnahme des elektronisch gesteuerten Linearmotors die korrekte Ausleitung eines auszuleitenden Gegenstandes überprüft werden.

In diesem Fall kann der zeitliche Verlauf des Soll-Wertes dem zeitlichen Verlauf der Stromaufnahme und/oder der Positionsaufnahme des elektronisch gesteuerten Linearmotors während eines Ausleitvorgangs entsprechen, bei dem der Gegenstand korrekt aus der Sequenz von Gegenständen ausgeleitet wird.

Alternativ kann der zeitliche Verlauf des Soll-Wertes insbesondere dem zeitlichen Verlauf der Stromaufnahme und/oder der Positionsaufnahme des elektronisch gesteuerten Linearmotors während eines unbelasteten Ausleitvorganges entsprechen, insbesondere bei dem also kein Gegenstand ausgeleitet wird.

Unter einer Stromaufnahme kann hierbei insbesondere die vom Linearmotor aufgenommene Stromstärke verstanden werden. Unter einer Positionsaufnahme kann insbesondere eine Positionsänderung eines beweglichen Teil des Linearmotors, insbesondere eines Läufers des Linearmotors, verstanden werden. Die Positionsaufnahme kann dabei von einem internen und/oder externen Positionsgeber bestimmt werden.

Der Schritt des Vergleichens des zeitlichen Verlaufs des Ist-Wertes mit dem zeitlichen Verlauf des Soll-Wertes kann insbesondere ein Bestimmen einer Differenz zwischen dem zeitlichen Verlauf des Ist-Wertes und dem zeitlichen Verlauf des Soll-Wertes der belastungsabhängigen Größe umfassen. Durch das Bilden einer Differenz können Unterschiede zwischen Ist-Werten und Soll-Werten auf einfache Weise festgestellt werden.

Insbesondere kann die Differenz einer Differenzkurve entsprechen. Als Differenzkurve kann hier der zeitliche Verlauf der Differenz des Ist-Wertes vom Soll-Wert der wenigstens einen belastungsabhängigen Größe verstanden werden.

Das Vergleichen des zeitlichen Verlaufs des Ist-Wertes mit dem zeitlichen Verlauf des Soll-Wertes kann außerdem ein Bestimmen umfassen, ob die Differenz ein vorherbestimmtes Kriterium erfüllt. Beispielsweise kann bestimmt werden, ob die Differenz einen vorherbestimmten Schwellenwert übersteigt. Mit anderen Worten kann bestimmt werden, ob ein Wert der Differenzkurve einen vorherbestimmten Schwellenwert übersteigt.

Abhängig davon, ob als zeitlicher Verlauf des Soll-Wertes der zeitliche Verlauf des unbelasteten Ausleitsystems oder des belasteten Ausleitsystems gewählt wurde, kann aus der Tatsache, dass die Differenz einen vorherbestimmten Schwellenwert übersteigt, geschlossen werden, dass die Ausleitung korrekt beziehungsweise nicht korrekt durchgeführt wurde.

Mit einem oben beschriebenen Verfahren kann die Ausleitung mehrerer Gegenstände aus der Sequenz von Gegenständen überprüft werden, insbesondere wobei ein Ergebnis der Überprüfung für die Ausleitung mehrerer Gegenstände, insbesondere eines jeden der Gegenstände, gespeichert wird. Das Speichern der Ergebnisse erlaubt eine Analyse der Ausleitvorgänge, wodurch Störungen oder systematische Fehler des Ausleitsystems, des zuführenden Systems und/oder vorgeschalteter Behandlungsmaschinen basierend auf den gespeicherten Ergebnissen festgestellt werden können.

Mit anderen Worten können die Schritte eines oben beschriebenen Verfahrens mehrfach, insbesondere wiederholt, insbesondere für mehrere Ausleitvorgänge, durchgeführt werden.

Bei den systematischen Fehlern kann es sich beispielsweise um Verschleiß und/oder Fehleinstellungen des Ausleitsystems, des zuführenden Systems und/oder vorgeschalteter Behandlungsmaschinen handeln. Das zuführende System kann insbesondere ein Transportelement sein, welches die Sequenz von Gegenständen, insbesondere hintereinander, am Ausleitsystem vorbeiführt.

Eine vorgeschaltete Behandlungsmaschine kann beispielsweise eine Maschine zum Behandeln von Gegenständen in der Getränkeindustrie sein, beispielsweise eine Behälterherstellungsmaschine, eine Reinigungsvorrichtung, ein Füller oder eine Etikettiervorrichtung.

Das Verfahren kann außerdem ein Bestimmen, ob die Ergebnisse der Ausleitung der Gegenstände ein vorherbestimmtes Kriterium erfüllen, umfassen. Dadurch können Störungen des Ausleitsystems, des zuführenden Systems und/oder vorgeschalteter Behandlungsmaschinen effektiv bestimmt werden.

Beispielsweise kann die Differenz zwischen dem zeitlichen Verlauf des Ist-Wertes und dem zeitlichen Verlauf des Soll-Wertes der belastungsabhängigen Größe für mehrere auszuleitende Gegenstände bestimmt und gemittelt werden und anschließend bestimmt werden, ob die mittlere Differenz oder ein Wert der mittleren Differenzkurve einen vorherbestimmten Schwellenwert übersteigt. Dadurch kann beispielsweise bestimmt werden, ob die Sequenz von Gegenständen korrekt, beispielsweise zentrisch, auf dem Transportelement angeordnet ist, welches die Sequenz von Gegenständen am Ausleitsystem vorbeiführt.

Alternativ oder zusätzlich kann bestimmt werden, ob die Anzahl und/oder die zeitliche Frequenz von Ausleitungen einen vorherbestimmten Schwellenwert übersteigt. Dadurch können Fehler in vorgeschalteten Behandlungsmaschinen festgestellt werden.

Alternativ oder zusätzlich kann bestimmt werden, ob die Anzahl und/oder die zeitliche Frequenz von fehlerhaften Ausleitungen, also Ausleitversuchen, bei denen der auszuleitende Gegenstand nicht korrekt ausgeleitet wurde, einen vorherbestimmten Schwellenwert übersteigt.

Die Erfindung stellt also ein Verfahren zum Überprüfen der Ausleitung mehrerer auszuleitender Gegenstände aus einer Sequenz von Gegenständen durch ein Ausleitsystem bereit, umfassend die Schritte: für jeden der auzuleitenden Gegenstände: Bestimmen des zeitlichen Verlaufs eines Ist-Wertes wenigstens einer belastungsabhängigen Größe des Ausleitsystems und Vergleichen des zeitlichen Verlaufs des Ist-Wertes mit dem zeitlichen Verlauf des Soll-Wertes dieser wenigstens einen belastungsabhängigen Größe.

Ein Ergebnis der Überprüfung kann für die Ausleitung eines jeden der Gegenstände gespeichert werden. Basierend auf den gespeicherten Ergebnissen können Störungen oder systematische Fehler des Ausleitsystems, des zuführenden Systems und/oder vorgeschalteter Behandlungsmaschinen festgestellt werden.

Insbesondere kann bestimmt werden, ob die Ergebnisse der Ausleitung der Gegenstände ein vorherbestimmtes Kriterium erfüllen. Das Verfahren kann außerdem für jeden der auszuleitenden Gegenstände eines oder mehrere der oben genannten Merkmale umfassen.

Die Erfindung stellt außerdem ein Verfahren zum Überprüfen der Ausleitung mehrerer Gegenstände aus einer Sequenz von Gegenständen durch ein Ausleitsystem bereit, wobei ein Ergebnis der Überprüfung für die Ausleitung eines jeden der Gegenstände gespeichert wird.

Durch die Speicherung der Ergebnisse ist eine Analyse des Ausleitsystems, des zuführenden Systems und/oder vorgeschalteter Behandlungsmaschinen basierend auf den gespeicherten Ergebnissen möglich.

Das Verfahren kann außerdem ein Bestimmen, ob die Ergebnisse der Überprüfung der Ausleitung der Gegenstände ein vorherbestimmtes Kriterium erfüllen, umfassen.

Das Verfahren kann insbesondere ein Überprüfen der Ausleitung mehrerer Gegenstände umfassen, insbesondere wobei das Überprüfen gemäß eines oben beschriebenen Verfahrens durchgeführt wird.

Das Verfahren kann eines oder mehrere der oben genannten Merkmale aufweisen. Insbesondere können das Ausleitsystem, die Gegenstände und/oder das vorherbestimmte Kriterium eines oder mehrere der oben genannten Merkmale aufweisen.

Die Erfindung stellt außerdem eine Vorrichtung zum Überprüfen der Ausleitung eines oder mehrerer Gegenstände aus einer Sequenz von Gegenständen durch ein Ausleitsystem bereit, umfassend ein Steuerungselement, das derart konfiguriert ist, dass es ein oben beschriebenes Verfahren zum Überprüfen der Ausleitung eines oder mehrerer Gegenstände durchführen kann.

Das Steuerungselement kann insbesondere derart konfiguriert sein, dass es im Betrieb der Vorrichtung, insbesondere im Betrieb in einem Ausleitsystem, ein oben beschriebenes Verfahren zum Überprüfen der Ausleitung eines oder mehrerer Gegenstände durchführt.

Die Vorrichtung kann insbesondere ein Messelement zum Bestimmen des zeitlichen Verlaufs eines Ist-Wertes wenigstens einer belastungsabhängigen Größe des Ausleitsystems umfassen. Das Messelement kann beispielsweise ein externer oder interner Positionsgeber sein.

Das Steuerungselement kann derart konfiguriert sein, dass es den zeitlichen Verlauf des Ist-Wertes mit dem zeitlichen Verlauf des Soll-Wertes der wenigstens einen belastungsabhängigen Größe vergleicht.

Die Erfindung stellt außerdem ein Ausleitsystem bereit, umfassend eine oben beschriebene Vorrichtung zum Überprüfen der Ausleitung eines oder mehrerer Gegenstände aus einer Sequenz von Gegenständen.

Die Vorrichtung kann insbesondere eines oder mehrere der oben beschriebenen Merkmale umfassen.

Das Ausleitsystem kann einen Pusher und/oder einen elektronisch gesteuerten Linearmotor umfassen, insbesondere wobei der elektronisch gesteuerte Linearmotor den Pusher antreibt oder ein Pusher ist.

Weitere Vorteile und Merkmale der Erfindung werden nachfolgend anhand der beispielhaften Figuren erläutert. Dabei zeigt
- Figur 1: ein beispielhaftes Ausleitsystem zum Ausleiten eines Gegenstandes aus einer Sequenz von Gegenständen;
- Figur 2: einen beispielhaften zeitlichen Verlauf eines Ist-Wertes und eines Soll-Wertes einer belastungsabhängigen Größe eines Ausleitsystems; und
- Figur 3: eine Illustration eines beispielhaften Verfahrens zum Überprüfen der Ausleitung eines Gegenstandes in Form eines Flussdiagramms.

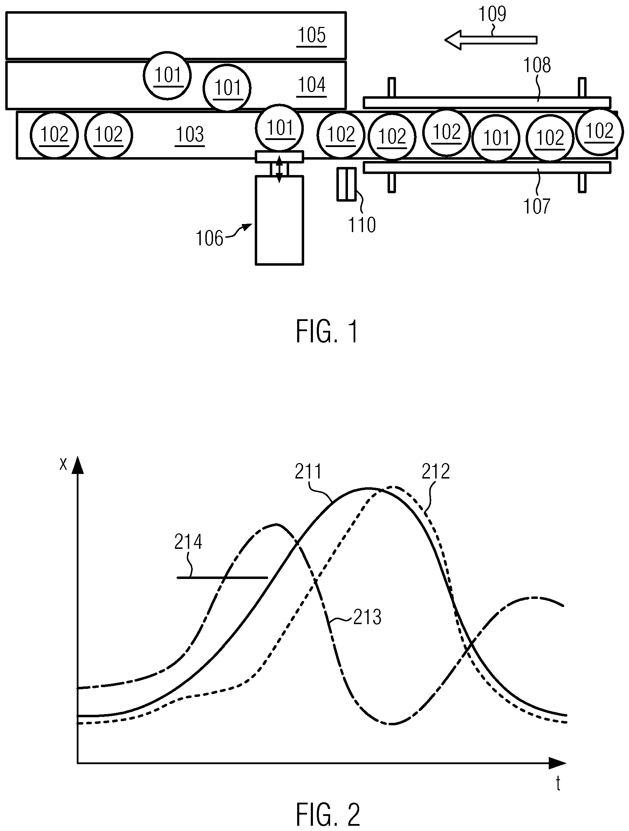

In Figur 1 ist ein beispielhaftes Ausleitsystem gezeigt. Außerdem zeigt Figur 1 eine Sequenz von Gegenständen, welche sowohl auszuleitende, beispielsweise fehlerhafte, Gegenstände 101 als auch nicht auszuleitende, beispielsweise fehlerfreie, Gegenstände 102 umfasst. Die Sequenz von Gegenständen wird auf einem Förderelement 103, beispielsweise einem Förderband, in Förderrichtung 109 gefördert. Figur 1 zeigt außerdem ein Ausleitsystem 106 umfassend einen durch einen elektronisch gesteuerten Linearmotor gebildeten Pusher.

Durch den Pusher, insbesondere durch ein Kontaktelement des Pushers, beispielsweise eine Pusherplatte, können Gegenstände 101 aus der Sequenz von Gegenständen ausgeleitet werden und auf den Förderelementen 104 beziehungsweise 105 angeordnet und von dort abtransportiert werden. Ein Sensor 110 ist in Förderrichtung 109 der Sequenz von Gegenständen vor dem Ausleitsystem 106 angeordnet, welcher derart ausgebildet und/oder konfiguriert ist, dass er einen auszuleitenden Gegenstand 101 erkennen kann. Bei dem Sensor 110 kann es sich beispielsweise um einen optischen Sensor, insbesondere eine Kamera, handeln. Auf dem Förderelement 103 wird die Sequenz von Gegenständen durch eine Führungselemente 107 beziehungsweise 108 seitlich geführt.

Das Ausleitsystem 106 kann wenigstens eine belastungsabhängige Größe aufweisen, welche im Fall, dass ein Gegenstand korrekt ausgeleitet wird, einen unterschiedlichen zeitlichen Verlauf zu dem Fall, dass der Gegenstand nicht korrekt ausgeleitet wird, aufweist.

Die belastungsabhängige Größe kann beispielsweise eine Auslenkung des Kontaktelements des Pushers des Ausleitsystems 106 sein.

Figur 2 zeigt den beispielhaften Verlauf 212 eines Ist-Wertes der räumlichen Auslenkung einer Pusherplatte während eines Ausleitvorgangs. Auf der Abszisse des beispielhaften Diagramms ist die Zeit dargestellt, während auf der Ordinate die Position einer Pusherplatte des Pushers dargestellt ist. Während des Ausleitvorgangs bewegt sich die Pusherplatte zunächst nach vorn, um den Gegenstand aus der Sequenz von Gegenständen zu drücken und kehrt danach wieder in seine Ausgangsposition zurück.

Die Größen auf der Ordinate und der Abszisse sind in willkürlichen Einheiten dargestellt, da das Diagramm lediglich der Illustration dient.

Das beispielhafte Diagramm in Figur 2 zeigt den zeitlichen Verlauf des Soll-Wertes (211) der Auslenkung der Pusherplatte.

In Figur 2 ist außerdem die Differenz, insbesondere der zeitliche Verlauf der Differenz zwischen Ist- und Soll-Wert, als Kurve 213 dargestellt. Aus der Tatsache, dass die Differenzkurve 213 den vorherbestimmten Schwellenwert 214 übersteigt, kann in diesem Fall geschlossen werden, dass der Gegenstand getroffen wurde und damit korrekt aus der Sequenz von Gegenständen ausgeleitet wurde.

Hätte die Pusherplatte keine Flasche getroffen, wären die Kurven 211 und 212 im Wesentlichen identisch und die Differenzkurve 213 würde im Wesentlichen einer horizontalen Geraden entsprechen.

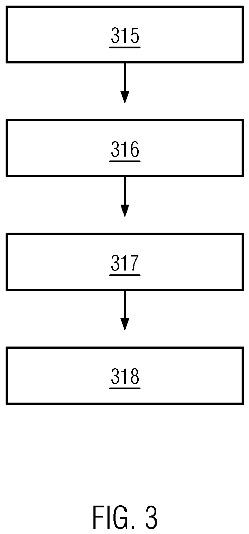

Figur 3 illustriert ein beispielhaftes Verfahren zum Überprüfen der Ausleitung eines Gegenstandes aus einer Sequenz von Gegenständen durch ein Ausleitsystem in Form eines Flussdiagramms. Hier wird angenommen, dass es sich bei dem auszuleitenden Gegenstand um einen fehlerhaften Gegenstand handelt. Der Gegenstand könnte jedoch auch aus anderen Gründen ausgeleitet werden, beispielsweise zur Qualitätskontrolle, zu Sortierungszwecken oder zum Ausleiten von Gegenständen, die zu Testzwecken gezielt in die Anlage eingeschleust wurden.

In Schritt 315 wird zunächst während eines Ausleitvorgangs der zeitliche Verlauf eines Ist-Wertes wenigstens einer belastungsabhängigen Größe des Ausleitsystems bestimmt. Die belastungsabhängige Größe des Ausleitsystems kann beispielsweise der Stromaufnahme und/oder einer Positionsaufnahme eines elektronisch gesteuerten Linearmotors des Ausleitsystems entsprechen. Der elektronisch gesteuerte Linearmotor kann dabei insbesondere einen Pusher antreiben oder ein Pusher sein.

In Schritt 316 wird der zeitliche Verlauf des Ist-Wertes der wenigstens einen belastungsabhängigen Größe vom zeitlichen Verlauf des Soll-Wertes der wenigstens einen belastungsabhängigen Größe abgezogen. Mit anderen Worten wird der zeitliche Verlauf der Differenz des Ist-Wertes vom Soll-Wert bestimmt.

In Schritt 317 wird bestimmt, ob die Differenz ein vorherbestimmtes Kriterium erfüllt, insbesondere ob wenigstens ein Wert im zeitlichen Verlauf der Differenz des Ist-Wertes vom Soll-Wert einen vorherbestimmten Wert überschreitet.

Abhängig davon, ob als Soll-Wert eine korrekte oder eine inkorrekte Ausleitung gewählt wurde, kann daraus, ob ein Differenzwert den vorherbestimmten Schwellenwert übersteigt, in Schritt 318 geschlossen werden, ob der fehlerhafte Gegenstand korrekt aus der Sequenz von Gegenständen ausgeleitet wurde.

Die Schritte 315 bis 318 können insbesondere mehrfach durchgeführt werden, insbesondere für mehrere Ausleitvorgänge. Das in Schritt 317 bestimmte Ergebnis des jeweiligen Ausleitergebnisses kann gespeichert werden. Durch diese aufeinanderfolgende Aufzeichnung der Ausleitung können Störungen im Ausleitsystem, in einem zuführenden System, beispielsweise einer Transportvorrichtung, und/oder in einer dem Ausleitsystem vorgeschalteten Behandlungsmaschine festgestellt werden.

Insbesondere kann bestimmt werden, ob die Ergebnisse der Ausleitung der Gegenstände ein vorherbestimmtes Kriterium erfüllen.

Beispielsweise kann die in Schritt 316 bestimmte Differenz für mehrere auszuleitende Gegenstände gemittelt werden und anschließend bestimmt werden, ob die mittlere Differenz oder ein Wert der mittleren Differenzkurve einen vorherbestimmten Schwellenwert übersteigt. Dadurch kann beispielsweise bestimmt werden, ob die Sequenz von Gegenständen korrekt, beispielsweise zentrisch, auf dem Transportelement, welches die Sequenz von Gegenständen am Ausleitsystem vorbeiführt, angeordnet ist.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Verfahren zum Überprüfen der Ausleitung eines Gegenstandes (101) aus einer Sequenz von Gegenständen durch ein Ausleitsystem (106), umfassend die Schritte:
Bestimmen des zeitlichen Verlaufs eines Ist-Wertes (212) wenigstens einer belastungsabhängigen Größe des Ausleitsystems (106); und
Vergleichen des zeitlichen Verlaufs des Ist-Wertes (212) mit dem zeitlichen Verlauf des Soll-Wertes (211) dieser wenigstens einen belastungsabhängigen Größe,
wobei die belastungsabhängige Größe in Abhängigkeit von einer Belastung oder Last des Ausleitsystems unterschiedliche Werte annehmen kann, und
wobei anhand des Vergleichs festgestellt wird, ob der Gegenstand korrekt aus der Sequenz von Gegenständen ausgeleitet wurde.

2. Verfahren nach Anspruch 1, wobei die wenigstens eine belastungsabhängige Größe eine Auslenkung eines Kontaktelements eines Pushers des Ausleitsystems (106) umfasst.

3. Verfahren nach Anspruch 1 oder 2, wobei die wenigstens eine belastungsabhängige Größe eine Stromaufnahme und/oder eine Positionsaufnahme eines elektronisch gesteuerten Linearmotors des Ausleitsystems (106) umfasst.

4. Verfahren nach einem der vorangegangenen Ansprüche, wobei der Schritt des Vergleichens ein Bestimmen einer Differenz des zeitlichen Verlaufs des Ist-Wertes (212) und des zeitlichen Verlaufs des Soll-Wertes (211) der belastungsabhängigen Größe umfasst.

5. Verfahren nach Anspruch 4, außerdem umfassend Bestimmen, ob die Differenz ein vorherbestimmtes Kriterium erfüllt.

6. Verfahren zum Überprüfen der Ausleitung mehrerer Gegenstände (101) aus einer Sequenz von Gegenständen durch ein Ausleitsystem (106), wobei ein Ergebnis der Überprüfung für die Ausleitung eines jeden der Gegenstände (101) gespeichert wird.

7. Verfahren nach Anspruch 6, außerdem umfassend Bestimmen, ob die Ergebnisse der Überprüfung der Ausleitung der Gegenstände ein vorherbestimmtes Kriterium erfüllen.

8. Vorrichtung zum Überprüfen der Ausleitung eines oder mehrerer Gegenstände aus einer Sequenz von Gegenständen durch ein Ausleitsystem, umfassend ein Steuerungselement, das derart konfiguriert ist, dass es ein Verfahren nach einem der vorangegangenen Ansprüche zum Überprüfen der Ausleitung eines oder mehrerer Gegenstände durchführen kann.

9. Ausleitsystem, umfassend eine Vorrichtung nach Anspruch 8 zum Überprüfen der Ausleitung eines oder mehrerer Gegenstände aus einer Sequenz von Gegenständen.

## Claims

1. Method for monitoring the discharge of an object (101) from a sequence of objects by a discharge system (106), comprising the steps of:
determining the time course of an actual value (212) of at least one load-dependent variable of the discharge system (106); and
comparing the time course of the actual value (212) with the time course of the nominal value (211) of said at least one load-dependent variable,
wherein the load-dependent variable can assume different values depending on a load or charge of the discharge system, and
wherein it is determined on the basis of the comparison whether the object was correctly discharged from the sequence of objects.

2. Method according to claim 1, wherein the at least one load-dependent variable comprises a deflection of a contact element of a pusher of the discharge system (106).

3. Method according to claim 1 or 2, wherein the at least one load-dependent variable comprises a current consumption and/or a position recording of an electronically controlled linear motor of the discharge system (106).

4. Method according to one of the preceding claims, wherein the step of comparing comprises determining a difference between the time course of the actual value (212) and the time course of the nominal value (211) of the load-dependent variable.

5. Method according to claim 4, further comprising determining whether the difference satisfies a predetermined criterion.

6. Method for monitoring the discharge of a plurality of objects (101) from a sequence of objects by a discharge system (106), wherein a monitoring result is stored for the discharge of each of the objects (101).

7. Method according to claim 6, further comprising determining whether the monitoring results of the discharge of the objects satisfy a predetermined criterion.

8. Apparatus for monitoring the discharge of one or a plurality of objects from a sequence of objects by a discharge system, comprising a control element configured to perform a method according to one of the preceding claims for monitoring the discharge of one or a plurality of objects.

9. Discharge system comprising an apparatus according to claim 8 for monitoring the discharge of one or a plurality of objects from a sequence of objects.

## Revendications

1. Procédé destiné à vérifier l'extraction d'un objet (101) d'une séquence d'objets, par un système d'extraction (106), comprenant les étapes suivantes :
la détermination de la variation dans le temps d'une valeur réelle (212) d'au moins une grandeur qui dépend de la sollicitation du système d'extraction (106) ; et
une comparaison de la variation dans le temps de la valeur réelle (212) avec la variation dans le temps de la valeur de consigne (211) de cette au moins une grandeur dépendant de la sollicitation ;
procédé
d'après lequel la grandeur dépendant de la sollicitation peut prendre des valeurs différentes en fonction d'une sollicitation ou d'une charge exercée sur le système d'extraction, et
d'après lequel au regard de la comparaison, on détermine si l'objet a été correctement extrait de la séquence d'objets.

2. Procédé selon la revendication 1, d'après lequel ladite au moins une grandeur dépendant de la sollicitation comprend une déviation d'un élément de contact d'un poussoir du système d'extraction (106).

3. Procédé selon la revendication 1 ou la revendication 2, d'après lequel ladite au moins une grandeur dépendant de la sollicitation comprend une absorption de courant et/ou un relevé de position d'un moteur linéaire commandé électroniquement, du système d'extraction (106).

4. Procédé selon l'une des revendications précédentes, d'après lequel l'étape de la comparaison comprend la détermination d'une différence de la variation dans le temps de la valeur réelle (212) et de la variation dans le temps de la valeur de consigne (211) de la grandeur dépendant de la sollicitation.

5. Procédé selon la revendication 4, comprenant en outre le fait de déterminer si la différence satisfait à un critère déterminé au préalable.

6. Procédé destiné à vérifier l'extraction de plusieurs objets (101) d'une séquence d'objets, par un système d'extraction (106), procédé d'après lequel un résultat de la vérification de l'extraction est mémorisé pour chacun des objets (101).

7. Procédé selon la revendication 6, comprenant en outre le fait de déterminer si les résultats de la vérification de l'extraction des objets satisfont à un critère déterminé au préalable.

8. Dispositif destiné à vérifier l'extraction d'un ou de plusieurs objets (101) d'une séquence d'objets, par un système d'extraction, comprenant un élément de commande, qui est configuré pour être en mesure d'effectuer la mise en œuvre d'un procédé selon l'une des revendications précédentes, destiné à vérifier l'extraction d'un ou de plusieurs objets.

9. Système d'extraction comprenant un dispositif selon la revendication 8 pour vérifier l'extraction d'un ou de plusieurs objets d'une séquence d'objets.
